# EUROPEAN PATENT SPECIFICATION

(11) **EP 2 985 828 B1**
(45) Date of publication and mention of the grant of the patent: **18.07.2018**
(21) Application number: 13881894.3
(22) Date of filing: 22.10.2013
(51) Int. Cl.: H01M 8/04537, H01M 8/04746

(54) **FUEL CELL SYSTEM AND FUEL CELL SYSTEM CONTROL METHOD**
BRENNSTOFFZELLENSYSTEM UND BRENNSTOFFZELLENSYSTEMSTEUERUNGSVERFAHREN
SYSTÈME DE PILE À COMBUSTIBLE ET PROCÉDÉ DE COMMANDE DE SYSTÈME DE PILE À COMBUSTIBLE

(30) Priority: 08.04.2013 JP 2013080171
(43) Date of publication of application: 17.02.2016
(73) Proprietor: Fuji Electric Co., Ltd., Kawasaki-shi, Kanagawa 210-9530 (JP)
(72) Inventor: SUZUKI Yuji, Kawasaki-shi Kanagawa 210-9530 (JP); SUZUKI Shigemasa, Kawasaki-shi Kanagawa 210-9530 (JP); FUKUMURA Taku, Kawasaki-shi Kanagawa 210-9530 (JP); OUCHI Takashi, Kawasaki-shi Kanagawa 210-9530 (JP)
(74) Representative: Appelt, Christian W.
(86) International application number: PCT/JP2013/078563
(87) International publication number: WO 2014/167746

(56) References cited:
- JP-A- 2004 220 823
- JP-A- 2004 529 456
- JP-A- 2006 019 115
- JP-A- 2008 123 968
- JP-A- 2012 028 165

## Description

### TECHNICAL FIELD

The present invention relates to a fuel cell system and a control method for the fuel cell system.

### BACKGROUND ART

A fuel cell is a device that converts the energy produced when generating water through a reaction between fuel gas containing hydrogen and oxygen, to produce electric energy. Because flammable gas is used as the fuel gas in the fuel cell, the system using the fuel cell needs to be designed to prevent leakage of the fuel gas.

Patent Literature 1 discloses a technique related to leakage of fuel gas. The technique disclosed in Patent Literature 1 measures an output voltage of a fuel cell during suspension of supply of fuel gas to the fuel cell, and determines the presence/absence of leakage of the fuel gas based on the result of the measurement.

Patent Literature 1: Japanese Patent Application Laid-open No. 2009-146658. JP 2008 123968 A describes a fuel cell that is provided with a fuel cell stack comprising laminating a plurality of single cells, respectively provided with an electrolyte, a pair of electrodes on both sides of the electrolyte, and a reaction gas channel for supplying a reaction gas to each of a pair of the electrodes. The fuel cell is also provided with a gas supply means for supplying a reaction gas and a pair of current collecting boards, arranged on both sides in a lamination direction of the fuel cell stack to collect generated electricity. The fuel cell is also includes to arrange a current bypass means that electrically connects between the other single cells arranged on both sides of the single cell, or in between the other single cell on one face side of the single cell and the current-collecting board arranged to the side opposite to the one face side of the single cell that bypasses the single cell. The reaction gas channel of the single cell is such as to arrange a gas cutoff mechanism that cuts off the reaction gas inflow to at least one electrode of a pair of the electrodes.

JP 2004 220823 A describes a cell abnormality detection device, wherein each fuel cell has a fuel gas passage separated from an oxidizer gas passage that is composed by catching both sides of an electrolyte thin film by a pair of gas separators, a fuel cell stack is composed by stacking a plurality of the cells in series, and a predetermined output voltage is provided by the stack. Each cell block is formed by serially stacking a predetermined number of the cells, the cell stack is composed by stacking a plurality of the cell blocks in series, and the output voltages of the respective cell blocks each having the same number of cells are compared with one another without previously defining an output voltage used as a reference, or the output voltages of the respective cell blocks are compared by using the output voltage of a specific one of the cells as a reference and by multiplying it by the number of the cells. A voltage comparator is used for detecting presence of an abnormal one of the cells in the fuel cell stack by difference of its voltage to actuate a safety operation means.

### DISCLOSURE OF THE INVENTION

In order to enhance the safety of a fuel cell, supply of fuel gas needs to be stopped when the fuel gas leaks during the generation of electricity by the fuel cell. Unfortunately, the technique disclosed in Patent Literature 1 theoretically is not capable of detecting leakage of fuel gas while the fuel cell generates electricity.

An object of the present invention is to provide a fuel cell system that is capable of suspending the supply of fuel gas when the fuel gas leaks, even during the generation of electricity by a fuel cell, and a control method for the fuel cell system.

A fuel cell system according to the present invention has a fuel cell, a voltage measurement unit, a comment output unit, and an interrupter. The fuel cell receives fuel gas through a pipe. The voltage measurement unit measures an output voltage of the fuel cell. The command output unit outputs an interruption command when a measurement result of the voltage measurement unit is equal to or less than a reference value during the generation of electricity by the fuel cell. The interrupter is provided in the pipe described above and interrupts the supply of the fuel gas to the fuel cell in response to the interruption command.

The present invention is defined in independent claims 1 and 6 and can suspend the supply of fuel gas when the fuel gas leaks, even during the generation of electricity by a fuel cell.

### BRIEF DESCRIPTION OF THE DRAWINGS

The foregoing and other objects, features and advantages of the present invention will become more apparent from the following description of preferred embodiments and accompanying diagrams.

Fig. 1 is a diagram showing a functional configuration of a fuel cell system according to a first embodiment;
Fig. 2 is a diagram showing a first example of a configuration of a fuel cell;
Fig. 3 is a diagram showing a second example of the configuration of the fuel cell; and
Fig. 4 is a diagram showing a functional configuration of a fuel cell system according to a second embodiment.

### BEST MODE FOR CARRYING OUT THE INVENTION

Embodiments are described hereinafter with reference to the drawings. The same reference numerals are used to indicate the corresponding components in all the diagrams, and the redundant explanation thereof will be omitted accordingly.

### (First Embodiment)

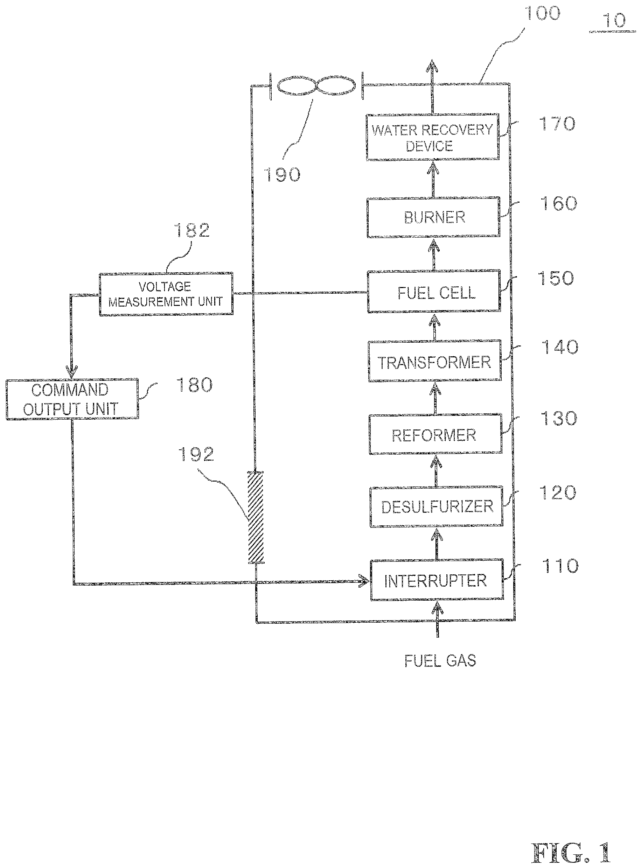

Fig. 1 is a block diagram showing a functional configuration of a fuel cell system 10 according to a first embodiment. The fuel cell system 10 according to the present embodiment has a fuel cell 150, a voltage measurement unit 182, a command output unit 180, and an interrupter 110. The fuel cell 150 receives fuel gas through a pipe and generates electricity using the received fuel gas and oxygen-containing gas (e.g., air). The voltage measurement unit 182 measures an output voltage of the fuel cell 150. The command output unit 180 outputs an interruption command when the measurement result of the voltage measurement unit 182 becomes equal to or less than a reference value during the generation of electricity by the fuel cell 150. The interrupter 110 is provided in the pipe and interrupts the supply of fuel gas to the fuel cell 150 in response to the interruption command output by the command output unit 180. The interrupter 110 is, for example, a valve.

The voltage measurement unit 182 outputs the output voltage of the fuel cell 150 to the command output unit 180 only while the fuel cell 150 generates electricity. Because outputs of the fuel cell 150 are not stable immediately after the beginning of the operation of the fuel cell 150, the voltage measurement unit 182 starts outputting the output voltage of the fuel cell 150 after a lapse of a certain period of time (e.g., at least one minute) from the start of the operation of the fuel cell 150. Such a process can be realized by controlling the operation of the voltage measurement unit 182 using a timer.

In the present embodiment, the command output unit 180 is configured with an electric circuit, and does not execute software processing. The command output unit 180 is a relay circuit. Therefore, the command output unit 180 is highly reliable and complies with a CE marking. The command output unit 180 outputs an interruption command when the measurement result of the voltage measurement unit 182 becomes equal to or less than the reference value throughout a predetermined certain period of time (e.g., at least one second). Such a process can be realized by combining the relay circuit with the timer.

The fuel cell system 10 further has a desulfurizer 120, a reformer 130, a transformer 140, a burner 160, and a water recovery device 170. The desulfurizer 120 performs a desulfurization treatment on the fuel gas that passes through the interrupter 110. The reformer 130 performs a reforming treatment on the resultant desulfurized fuel gas. The burner 160 burns the combustible components of exhaust gas supplied from the fuel cell 150. The heat generated by the burner 160 is used as a heat source of the reformer 130. The water recovery device 170 recovers the water contained in the exhaust gas supplied from the burner 160.

The interrupter 110, desulfurizer 120, reformer 130, transformer 140, fuel cell 150, burner 160, and water recovery device 170 are stored in a casing 100. The casing 100 is provided with a ventilation fan 190 and an inlet port 192. While the fuel cell 150 is operated, the atmosphere inside the casing 100 is exhausted by the ventilation fan 190. Therefore, even when the fuel gas leaks into the casing 100, the leaked fuel gas is exhausted promptly to the outside of the casing 100.

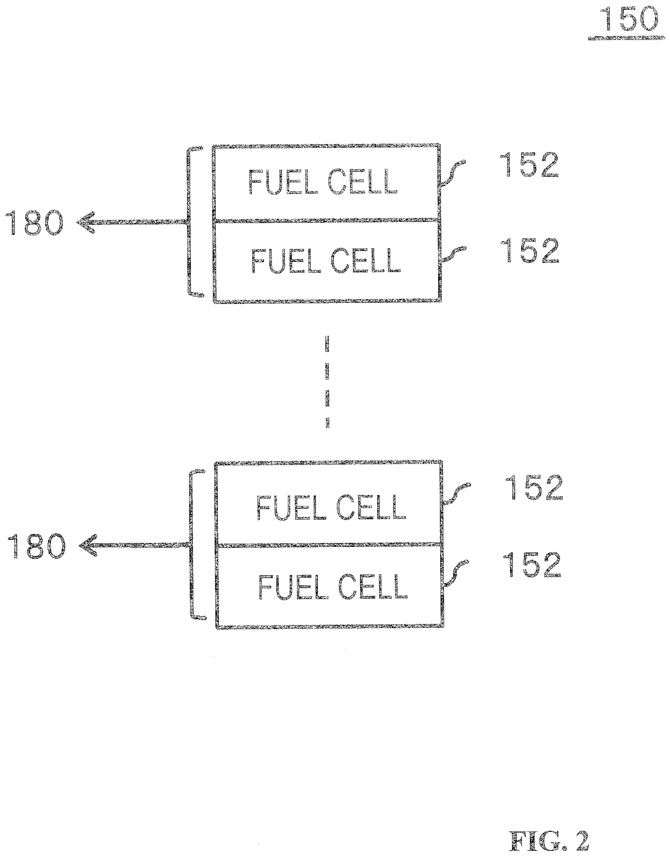

Fig. 2 is a diagram showing a first example of the configuration of the fuel cell 150. The fuel cell 150 has a plurality of fuel battery cells 152. At least some of the plurality of fuel battery cells 152 are connected in series. These serially connected fuel battery cells 152 are divided into a plurality of groups. The voltage measurement unit 182 and the command output unit 180 are provided in each group. In other words, the voltage measurement unit 182 in each group measures a total value of the voltages of the fuel battery cells 152 of each group (value of serial voltages). In the present embodiment, the groups have an equal number of the fuel battery cells 152. For this reason, relay circuits to be used as the plurality of voltage measurement units 182 can all be the same. In addition, the magnitude (voltage) of a signal to be input to each relay circuit can be regulated by adjusting the number of the fuel battery cells 152 connected in series. Therefore, the magnitude of the input signal does not have to be designated when selecting a relay circuit to be used as the voltage measurement units 182. Therefore, a general-purpose relay circuit can be used as the voltage measurement units 182. This can reduce the manufacturing cost of the fuel cell system 10.

With the ON-state voltage of the relay circuit used as each voltage measurement unit 182 being taken as A(V) and the OFF-state voltage of the same as B(V), the number of the fuel battery cells 152 belonging to one group needs to be set in such a manner that the total value of the output voltages of the fuel cell 150 obtained during the normal operation becomes equal to or higher than A(V) and that the total value of the output voltages of the fuel cell 150 obtained when the fuel gas is leaking becomes equal to or lower than B(V). For instance, in case of using a relay circuit with a rated voltage of 48 VDC, ON-state voltage of 38.4 V and OFF-state voltage of 14.4 V, the number of the fuel battery cells 152 belonging to one group needs to be set in such a manner that the total value of the voltages obtained during the normal operation becomes equal to or higher than 38.4 V and that the total value of the voltages obtained when the fuel gas is leaking becomes equal to or lower than 14.4 V.

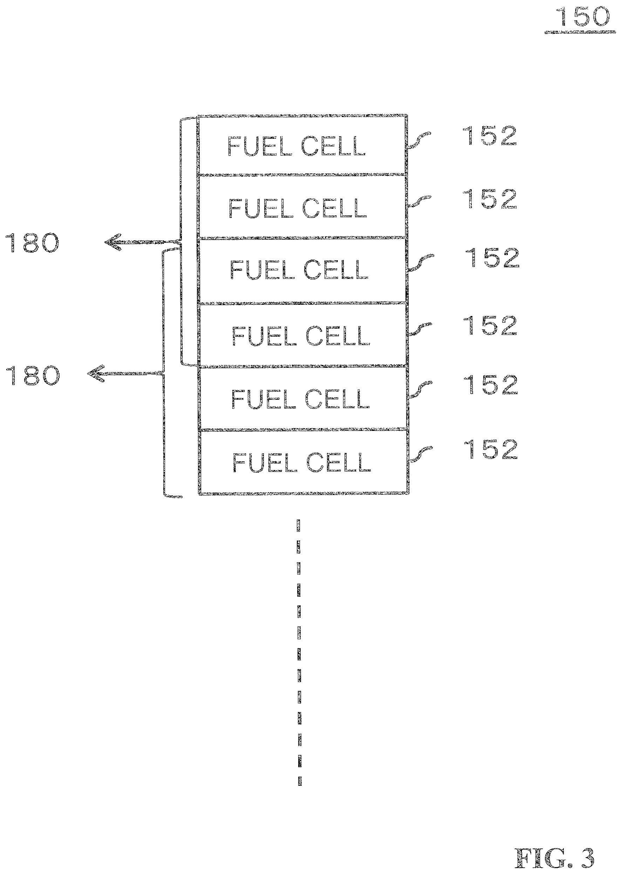

Fig. 3 is a diagram showing a second example of the configuration of the fuel cell 150. As described above, with the ON-state voltage of the relay circuit being taken as A(V) and the OFF-state voltage of the same as B(V), the number of the fuel battery cells 152 belonging to one group needs to be set in such a manner that the total value of the voltages obtained during the normal operation becomes equal to or higher than A(V) and that the total value of the voltages obtained when the fuel gas is leaking becomes equal to or lower than B(V). In case of using identical relay circuits as the voltage measurement units 182, the number of the fuel battery cells 152 in each group needs to be the same. In this case, simply dividing the number of the fuel battery cells 152 by a factor of this number (= the number of groups) might not satisfy the condition described above. In the example shown in Fig. 3, at least one fuel battery cell 152 belongs to a plurality of groups (e.g., two groups). Such a configuration can satisfy the foregoing condition regardless of the number of the fuel battery cells 152.

The principle of detecting leakage of the fuel gas in the fuel cell system 10 is described next. When the fuel gas leaks in the fuel cell system 10, the output voltage of the fuel cell 150 drops. Thus, in a case where the voltage of the fuel cell 150 becomes equal to or less than the reference value, it can be determined that there is leakage of the fuel gas in the fuel cell system 10. Therefore, as in the present embodiment in which the command output unit 180 outputs an interruption command to the interrupter 110 when the measurement result of the voltage measurement unit 182 becomes equal to or less than the reference value during the generation of electricity by the fuel cell 150, leakage of the fuel gas in the fuel cell system 10 can be prevented.

Furthermore, a relay circuit is used as each command output unit 180 in the present embodiment. This eliminates the need to execute software processing for the leakage detection processing, improving the reliability of the fuel cell system 10.

Moreover, the fuel battery cells 152 of the fuel cell 150 are divided into a plurality of groups, in which the serial voltages of each group are measured using the single voltage measurement unit 182 provided in each group. Then, when the measured value of any one of the voltage measurement units 182 becomes equal to or less than the reference value, the command output unit 180 outputs an interruption command to the interrupter 110. Therefore, while keeping the configurations of the voltage measurement units 182 and the command output units 180 simple, leakage of the fuel gas can be detected with high accuracy and the supply of the fuel gas can be interrupted.

In addition, such a configuration can, for example, eliminate a commercially available gas detector that has generally been used, leading to a reduction of the cost of the entire system related to gas.

In some cases, there is a voltage reduction in which the measured value of any one of the voltage measurement units 182 does not become equal to or less than the reference value. In such a case, by understanding the correlation between the voltage values and the amount of leakage of the gas beforehand and storing the correlation in the command output units 180, the command output units 180 can detect a small amount of leakage of the gas (a slow leak).

Also, some of the fuel battery cells 152 are divided into a plurality of groups, so that the groups can have the same number of fuel battery cells 152 and the command output units 180 of the respective groups can be configured with the same relay circuit.

When detecting leakage of the fuel gas and interrupting the supply of the fuel gas by means of the interrupter 110, the fuel gas remaining in the fuel cell system 10 is released to the outside of the fuel cell system 10 by a ventilation fan (not shown) that ventilates the inside of the fuel ceil system 10 at all times.

### (Second Embodiment)

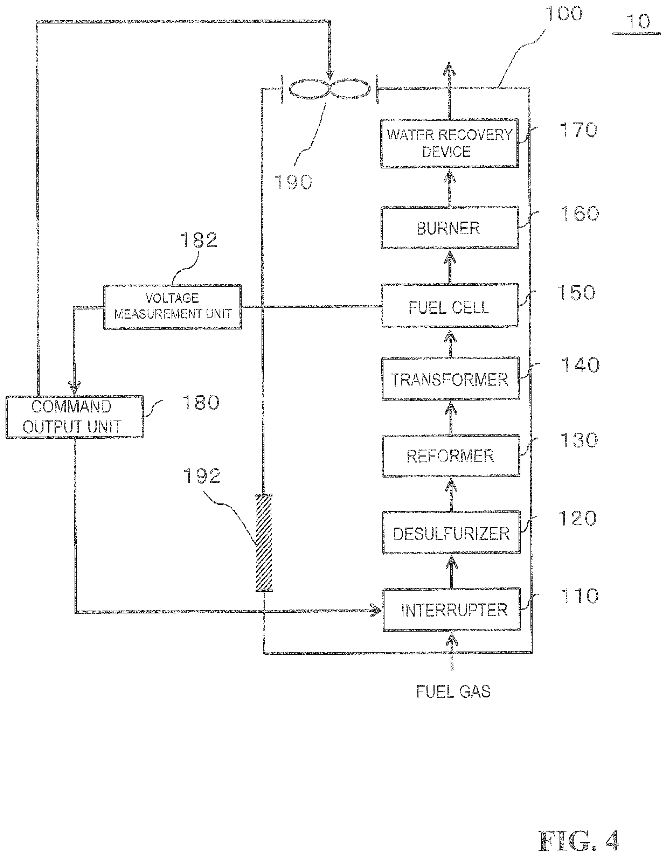

Fig. 4 is a block diagram showing the configuration of the fuel cell system 10 according to a second embodiment. The fuel cell system 10 according to the present embodiment has the same configuration as the fuel cell system 10 of the first embodiment, except that when leakage of the fuel gas is detected in the casing 100, the command output unit 180 outputs an interruption command and the fan speed of the ventilation fan 190 increases.

The present embodiment can achieve the same effects as those of the first embodiment. Also, when leakage of the fuel gas is detected in the casing 100, the fan speed of the ventilation fan 190 increases, promptly exhausting the leaked fuel gas to the outside of the casing 100.

The above has specifically described the present invention based on the embodiments; however, the present invention is not intended to be limited to the foregoing embodiments, and it goes without saying that various changes can be made without departing from the scope of the claims defining the present invention.

## Claims

1. A fuel cell system, comprising:
a fuel cell (150) that is configured to receive fuel gas through a pipe;
a voltage measurement unit (182) that is configured to measure an output voltage of the fuel cell (150);
a command output unit (180) that is configured to output an interruption command when a measurement result of the voltage measurement unit (182) is equal to or less than a reference value during the generation of electricity by the fuel cell (150); and
an interrupter (110) that is provided in the pipe and interrupts the supply of the fuel gas to the fuel cell (150) in response to the interruption command;
**characterized in that**
the command output unit (180) and the voltage measurement unit (182) are each a relay circuit.

2. The fuel cell system according to claim 1, wherein the voltage measurement unit is configured to measure and output the output voltage of the fuel cell while the fuel cell (150) is generating electricity, wherein the voltage measurement unit is configured to start outputting the output voltage after a lapse of a certain period of time from the start of the operation of the fuel cell (150).

3. The fuel cell system according to claim 1 or 2, wherein
the fuel cell (150) has a plurality of fuel battery cells (152), wherein at least some of the plurality of fuel battery cells (152) are connected in series,
the serially connected fuel battery cells are divided into a plurality of groups, the plurality of groups have the same number of fuel battery cells (152),
each of the plurality of groups is provided with the voltage measurement unit (182) and the command output unit (180), and
the command output unit (180) is configured to output the interruption command when a measurement result of at least one of the voltage measurement units (182) is equal to or less than the reference value.

4. The fuel cell system according to claim 3, wherein
at least one of the fuel battery cells (152) belongs to two or more of the plurality of groups.

5. The fuel cell system according to any one of claims 1 to 4, further comprising:
a casing (100) for storing the fuel cell; and
a ventilation fan (190) provided in the casing (100),
wherein the ventilation fan (190) is configured to exhaust an atmosphere inside the casing (100) while the fuel cell (150) is operated, and
the command output unit (180) is configured to increase a fan speed of the ventilation fan (190) when outputting the interruption command.

6. A control method for a fuel cell system, wherein
when an output voltage of a fuel cell (150), measured by a voltage measurement unit (182) that is a relay circuit, is equal to or less than a reference value during the generation of electricity by the fuel cell (150), a command output unit (180), that is a relay circuit, outputs an interruption command to an interrupter (110) that is attached to a pipe for supplying fuel gas to the fuel cell (150), and
the interrupter (110) interrupts the supply of the fuel gas to the fuel cell (150) in response to the interruption command.

## Patentansprüche

1. Brennstoffzellensystem, umfassend:
eine Brennstoffzelle (150), die konfiguriert ist, Brenngas durch ein Rohr zu empfangen;
eine Spannungsmesseinheit (182), die konfiguriert ist, eine Ausgangsspannung der Brennstoffzelle (150) zu messen;
eine Befehlsausgabeeinheit (180), die konfiguriert ist, einen Unterbrechungsbefehl auszugeben, wenn ein Messergebnis der Spannungsmesseinheit (182) während der Erzeugung von Elektrizität durch die Brennstoffzelle (150) gleich oder kleiner als ein Referenzwert ist; und
einen Unterbrecher (110), der in dem Rohr vorgesehen ist und die Zufuhr des Brennstoffgases zu der Brennstoffzelle (150) als Reaktion auf den Unterbrechungsbefehl unterbricht;
**dadurch gekennzeichnet, dass**
die Befehlsausgabeeinheit (180) und die Spannungsmesseinheit (182) jeweils eine Relaisschaltung sind.

2. Brennstoffzellensystem nach Anspruch 1, wobei die Spannungsmesseinheit konfiguriert ist, die Ausgangsspannung der Brennstoffzelle zu messen und auszugeben, während die Brennstoffzelle (150) Elektrizität erzeugt, wobei die Spannungsmesseinheit konfiguriert ist, mit der Ausgabe der Ausgangsspannung zu beginnen, nachdem eine bestimmten Zeitperiode vom Beginn des Betriebs der Brennstoffzelle (150) verstrichen ist.

3. Brennstoffzellensystem nach Anspruch 1 oder 2, wobei die Brennstoffzelle (150) mehrere Brennstoffbatteriezellen (152) aufweist, wobei zumindest einige der mehreren Brennstoffbatteriezellen (152) in Reihe geschaltet sind, die in Reihe geschalteten Brennstoffbatteriezellen in mehrere Gruppen unterteilt sind, wobei die mehreren Gruppen die gleiche Anzahl von Brennstoffbatteriezellen (152) aufweisen,
jede der mehreren Gruppen mit der Spannungsmesseinheit (182) und der Befehlsausgabeeinheit (180) versehen ist, und die Befehlsausgabeeinheit (180) konfiguriert ist, den Unterbrechungsbefehl auszugeben, wenn ein Messergebnis von mindestens einer der Spannungsmesseinheiten (182) gleich oder kleiner als der Referenzwert ist.

4. Brennstoffzellensystem nach Anspruch 3, wobei mindestens eine der Brennstoffbatteriezellen (152) zu zwei oder mehr der mehreren Gruppen gehört.

5. Brennstoffzellensystem nach einem der Ansprüche 1 bis 4, ferner umfassend:
ein Gehäuse (100) zum Aufnehmen der Brennstoffzelle; und
einen Lüfter (190), der in dem Gehäuse (100) vorgesehen ist,
wobei der Lüfter (190) konfiguriert ist, eine Atmosphäre innerhalb des Gehäuses (100) auszustoßen, während die Brennstoffzelle (150) betrieben wird, und
die Befehlsausgabeeinheit (180) konfiguriert ist, eine Lüftergeschwindigkeit des Lüfters (190) zu erhöhen, wenn der Unterbrechungsbefehl ausgegeben wird.

6. Steuerungsverfahren für ein Brennstoffzellensystem, wobei wenn eine Ausgangsspannung einer Brennstoffzelle (150), gemessen durch eine Spannungsmesseinheit (182), die eine Relaisschaltung ist, während der Erzeugung von Elektrizität durch die Brennstoffzelle (150) gleich oder kleiner als ein Referenzwert ist, eine Befehlsausgabeeinheit (180), das heißt eine Relaisschaltung, einen Unterbrechungsbefehl an einen Unterbrecher (110) ausgibt, der an einem Rohr zum Zuführen von Brennstoffgas an die Brennstoffzelle (150) angebracht ist, und
der Unterbrecher (110) die Zufuhr des Brenngases zu der Brennstoffzelle (150) als Reaktion auf den Unterbrechungsbefehl unterbricht.

## Revendications

1. Système de pile à combustible, comprenant :
une pile à combustible (150) qui est configurée de manière à recevoir du gaz combustible par l'intermédiaire d'une conduite ;
une unité de mesure de tension (182) qui est configurée de manière à mesurer une tension de sortie de la pile à combustible (150) ;
une unité de sortie de commande (180) qui est configurée de manière à fournir en sortie une commande d'interruption lorsqu'un résultat de mesure de l'unité de mesure de tension (182) est égal ou inférieur à une valeur de référence au cours de la production d'électricité par la pile à combustible (150) ; et
un interrupteur (110) qui est fourni dans la conduite et qui interrompt l'alimentation en gaz combustible de la pile à combustible (150) en réponse à la commande d'interruption ;
**caractérisé en ce que** :
l'unité de sortie de commande (180) et l'unité de mesure de tension (182) correspondent chacune à un circuit de relais.

2. Système de pile à combustible selon la revendication 1, dans lequel l'unité de mesure de tension est configurée de manière à mesurer et à fournir en sortie la tension de sortie de la pile à combustible tandis que la pile à combustible (150) produit de l'électricité, dans lequel l'unité de mesure de tension est configurée de manière à commencer à fournir en sortie la tension de sortie après l'écoulement d'une période de temps donnée depuis le début du fonctionnement de la pile à combustible (150).

3. Système de pile à combustible selon la revendication 1 ou 2, dans lequel :
la pile à combustible (150) présente une pluralité de cellules de pile à combustible (152), dans lequel au moins certaines cellules de la pluralité de cellules de pile à combustible (152) sont connectées en série ;
les cellules de pile à combustible connectées en série sont divisées en une pluralité de groupes, et la pluralité de groupes présente le même nombre de cellules de pile à combustible (152) ;
chaque groupe de la pluralité de groupes est muni de l'unité de mesure de tension (182) et de l'unité de sortie de commande (180) ; et
l'unité de sortie de commande (180) est configurée de manière à fournir en sortie la commande d'interruption, lorsqu'un résultat de mesure d'au moins l'une des unités de mesure de tension (182) est égal ou inférieur à la valeur de référence.

4. Système de pile à combustible selon la revendication 3, dans lequel au moins l'une des cellules de pile à combustible (152) appartient à deux groupes ou plus de la pluralité de groupes.

5. Système de pile à combustible selon l'une quelconque des revendications 1 à 4, comprenant en outre :
un boîtier (100) pour stocker la pile à combustible ; et
un ventilateur (190) fourni dans le boîtier (100) ;
dans lequel le ventilateur (190) est configuré de manière à évacuer l'atmosphère à l'intérieur du boîtier (100) pendant que la pile à combustible (150) fonctionne ; et
l'unité de sortie de commande (180) est configurée de manière à augmenter une vitesse de ventilateur du ventilateur (190) lors de la sortie de la commande d'interruption.

6. Procédé de commande pour un système de pile à combustible, dans lequel :
lorsqu'une tension de sortie d'une pile à combustible (150), mesurée par une unité de mesure de tension (182) qui correspond à un circuit de relais, est égale ou inférieure à une valeur de référence au cours de la production d'électricité par la pile à combustible (150), une unité de sortie de commande (180), laquelle correspond à un circuit de relais, fournit en sortie une commande d'interruption à un interrupteur (110) qui est fixé à une conduite destinée à alimenter la pile à combustible (150) en gaz combustible ; et
l'interrupteur (110) interrompt l'alimentation en gaz combustible de la pile à combustible (150) en réponse à la commande d'interruption.
